# EUROPEAN PATENT APPLICATION

(11) **EP 4 756 795 A1**
(43) Date of publication of application: **10.06.2026**
(21) Application number: 24856757.0
(22) Date of filing: 16.08.2024
(51) Int. Cl.: G10L 15/26, G10L 15/22, G10L 15/10, G10L 15/04, G10L 15/06, G10L 25/78, G06F 3/041

(54) **ELECTRONIC DEVICE FOR PROVIDING UTTERANCE CATEGORY DETERMINED ON BASIS OF UTTERANCE LOG, AND CONTROL METHOD THEREFOR**

(30) Priority: 18.08.2023 KR 20230108467; 20.10.2023 KR 20230141370
(71) Applicant: Samsung Electronics Co., Ltd., Suwon-si, Gyeonggi-do 16677 (KR)
(72) Inventor: PARK, Hyejin, Suwon-si Gyeonggi-do 16677 (KR); PARK, Byungsu, Suwon-si Gyeonggi-do 16677 (KR); SIM, Kisung, Suwon-si Gyeonggi-do 16677 (KR)
(74) Representative: Gulde & Partner
(86) International application number: PCT/KR2024/012233
(87) International publication number: WO 2025/042145

(57) **Abstract**

Disclosed are an electronic device for providing an utterance category determined on the basis of an utterance log, and a control method therefor. The electronic device according to an embodiment of the present document comprises a touch screen display, a communication module, and a processor. The processor may be configured to: transmit information about an utterance history of a user to an external device via the communication module, the utterance history of the user transmitted to the external device being categorized in at least one utterance category by at least one error detection module stored in the external device; in response to the transmission, acquire information about the at least one utterance category in which the utterance history was categorized and at least one representative utterance sentence belonging to the utterance category from the external device via the communication module; and provide the acquired utterance category and information about the representative utterance sentence via the touch screen display.

## Description

### [Technical Field]

The present disclosure relates to an electronic device providing an utterance category determined based on an utterance log and a control method thereof.

### [Background Art]

More and more services and additional functions are being provided through electronic devices, e.g., smartphones, or other portable electronic devices. To meet the needs of various users and raise use efficiency of electronic devices, communication service carriers or device manufacturers are jumping into competitions to develop electronic devices with differentiated and diversified functionalities. Accordingly, various functions that are provided through wearable devices are evolving more and more.

### [Detailed Description of the Invention]

### [Technical Problem]

In general, when a user of an electronic device uses an intelligent service (e.g., Samsung*) Bixby^{™}), the electronic device (e.g., a Bixby^{™} server) estimates characteristics and quality of a target service based on reviews and opinions of other users regarding the target service that the user intends to perform and provides the estimated characteristics and quality to the user. For example, when providing a service for a specific application, the electronic device (e.g., a smartphone) provides only items for "Try saying this" and/or "Review" on an intelligent service screen. However, there is a problem that it is difficult to accurately determine the intelligent service and to determine whether the target service is useful with such limited information alone. Accordingly, the electronic device (e.g., a Bixby^{™} server) may use a service that does not provide expected results to the user or may provide a service that provides quality below expectations.

According to an embodiment of the present disclosure, an electronic device capable of providing objective and accurate information to a user selecting and using each target service may be provided by automatically providing information such as successful utterance, failed utterance, and/or unsupported utterance of each target service based on utterance log information of the user (e.g., not based on review information of other users) to the user.

According to an embodiment of the present disclosure, a control method of an electronic device capable of providing objective and accurate information to a user selecting and using each target service may be provided by automatically providing information such as successful utterance, failed utterance, and/or unsupported utterance of each target service based on utterance log information of the user (e.g., not based on review information of other users) to the user.

### [Technical Solution]

An electronic device according to an embodiment of the present disclosure includes a touchscreen display, a communication module, and a processor, and the processor may be configured to transmit, through the communication module, information about a user's utterance history to an external device, wherein at least one utterance category of the user's utterance history transmitted to the external device is determined by at least one error detection module stored in the external device, in response to the transmission, obtain, through the communication module, from the external device, information about a representative sentence belonging to the determined at least one utterance category, and provide the information about the obtained representative sentence through the touchscreen display.

A method for controlling an electronic device according to an embodiment of the present disclosure may include an operation of transmitting, through a communication module of the electronic device, information about a user's utterance history to an external device, an operation of, wherein at least one utterance category of the user's utterance history transmitted to the external device is determined by at least one error detection module stored in the external device, in response to the transmission, obtaining, through the communication module, from the external device, information about a representative sentence belonging to the determined at least one utterance category, and an operation of providing the information about the obtained representative sentence through a touchscreen display of the electronic device.

### [Advantageous Effects]

According to an embodiment of the present disclosure, an electronic device capable of providing objective and accurate information to a user selecting and using each target service may be provided by automatically providing information such as successful utterance, failed utterance, and/or unsupported utterance of each target service based on utterance log information of the user (e.g., not based on review information of other users) to the user.

### [Brief Description of Drawings]

FIG. 1 is a diagram illustrating an electronic device in a network environment according to an embodiment.
FIG. 2 is a block diagram illustrating an integrated intelligence system according to an embodiment of the present disclosure.
FIG. 3 is a diagram illustrating a screen on which a user terminal processes a speech input received through an intelligent app according to an embodiment of the present disclosure.
FIG. 4 is a diagram illustrating a screen on which a user terminal processes a speech input received through an intelligent app according to an embodiment of the present disclosure.
FIG. 5 is an example diagram illustrating a function or operation in which an electronic device provides a representative utterance sentence according to an utterance category based on an utterance log according to an embodiment of the present disclosure.
FIG. 6 is an example diagram illustrating a configuration of an intelligence system according to an embodiment of the present disclosure.
FIG. 7 is an example diagram illustrating a function or operation in which an error detection module is generated and/or trained according to an embodiment of the present disclosure.
FIG. 8 is an example diagram illustrating the error detection module according to an embodiment of the present disclosure.
FIG. 9 is an example diagram illustrating utterance log information according to an embodiment of the present disclosure.
FIG. 10 is an example diagram illustrating a function or operation of an end-to-end error detection module according to an embodiment of the present disclosure.
FIG. 11 is an example diagram illustrating a function or operation of a failure type detection module according to an embodiment of the present disclosure.
FIG. 12 is an example diagram illustrating a function or operation of a slot error detection module according to an embodiment of the present disclosure.
FIGS. 13 and 14 are example diagrams illustrating a function or operation of a client and server error detection module according to an embodiment of the present disclosure.
FIG. 15 is an example diagram illustrating a function or operation of an integration module according to an embodiment of the present disclosure.
FIG. 16 is an example diagram illustrating a data format stored in a prediction database according to an embodiment of the present disclosure.
FIG. 17 is an example diagram illustrating a data format for an unsupported utterance as an utterance category transmitted to an electronic device according to an embodiment of the present disclosure.
FIG. 18 is an example diagram illustrating a function or operation of the failed utterance extraction module according to an embodiment of the present disclosure.
FIG. 19 is an example diagram illustrating a data format for a failed utterance as an utterance category transmitted to an electronic device according to an embodiment of the present disclosure.
FIG. 20 is an example diagram illustrating a function or operation of the successful utterance extraction module according to an embodiment of the present disclosure.
FIG. 21 is an example diagram illustrating a data format for a successful utterance as an utterance category transmitted to an electronic device according to an embodiment of the present disclosure.
FIG. 22A is an example diagram illustrating an utterance category and at least one representative utterance sentence provided through an electronic device according to an embodiment of the present disclosure.
FIG. 22B is an example diagram illustrating an utterance category and at least one representative utterance sentence provided through a website according to an embodiment of the present disclosure.
FIG. 23 is an example diagram illustrating a function or operation providing a service related to an unsupported utterance when the unsupported utterance is obtained according to an embodiment of the present disclosure.
FIG. 24 is a system flowchart illustrating a function or operation in which the electronic device provides a representative utterance sentence according to an utterance category based on an utterance log according to an embodiment of the present disclosure.

### [Mode for Carrying out the Invention]

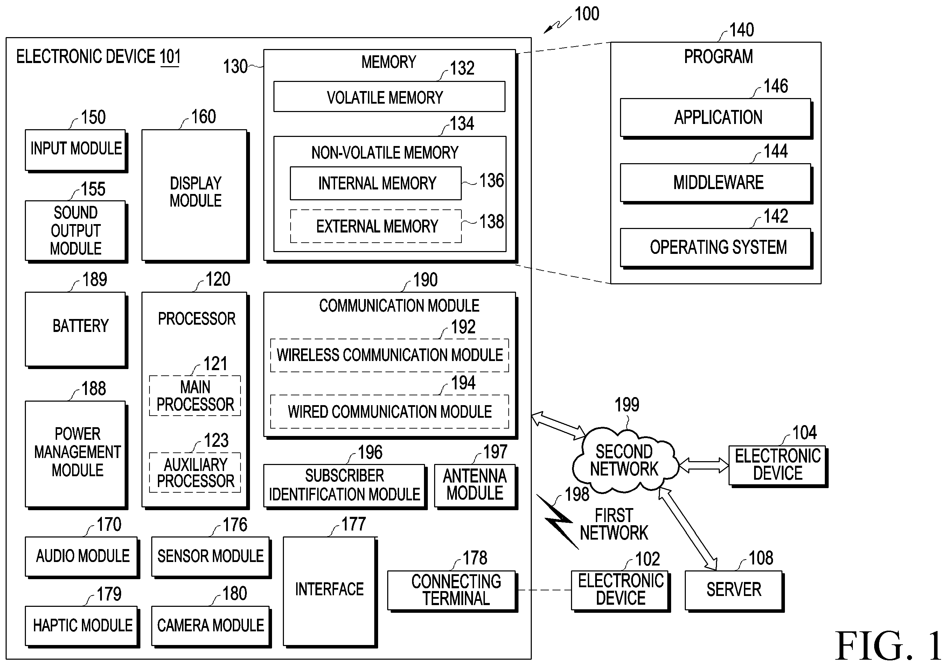

FIG. 1 is a block diagram illustrating an electronic device 101 in a network environment 100, according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., the electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wiredly) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

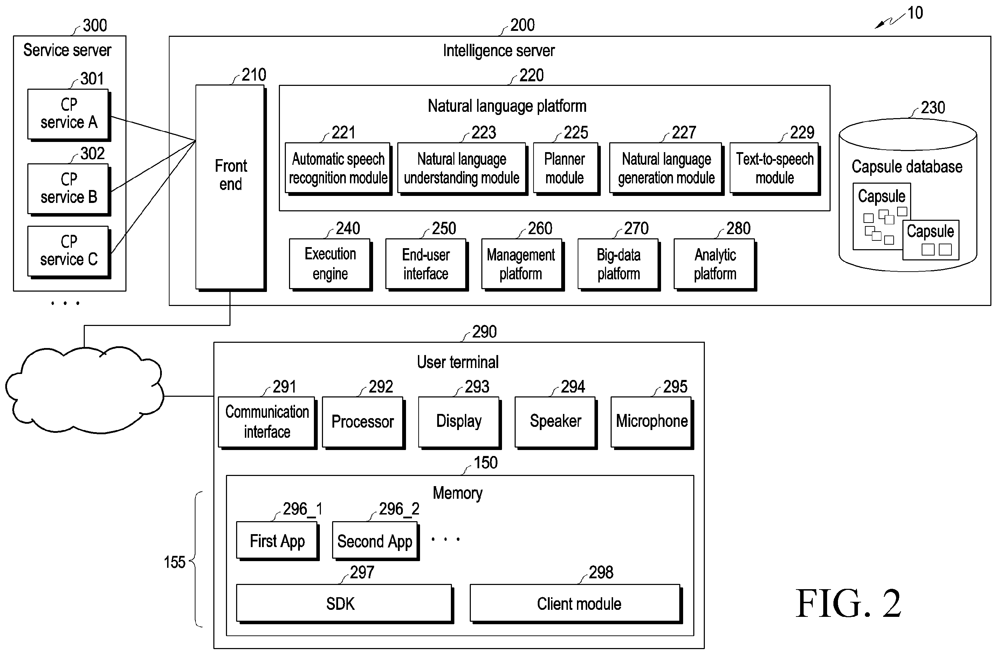

FIG. 2 is a block diagram illustrating an integrated intelligence system according to an embodiment.

Referring to FIG. 2, according to an embodiment, an integrated intelligence system 10 may include a user terminal 290, an intelligent server 200, and a service server 300.

According to an embodiment, the user terminal 290 may be a terminal device (or electronic device) that may connect to the Internet, e.g., a mobile phone, smartphone, personal digital assistant (PDA), laptop computer, TV, home appliance, electronic device, HMD, or smart speaker.

According to the shown embodiment, the user terminal 290 may include a communication interface 291, a microphone 295, a speaker 294, a display 293, memory 299, or a processor 292. The above-enumerated components may be operatively or electrically connected with each other.

According to an embodiment, the communication interface 291 may be configured to connect to, and transmit/receive data to/from, an external device. According to an embodiment, the microphone 295 may receive a sound (e.g., the user's utterance) and convert the sound into an electrical signal. According to an embodiment, the speaker 294 may output the electrical signal as a sound (e.g., speech). According to an embodiment, the display 293 may be configured to display images or videos. According to an embodiment, the display 293 may display a graphic user interface (GUI) of an app (or application program) that is executed.

According to an embodiment, the memory 299 may store a client module 298, a software development kit (SDK) 297, and a plurality of apps 296. The client module 298 and the SDK 297 may configure a framework (or solution program) for performing general-purpose functions. The client module 298 or SDK 297 may configure a framework for processing speech input.

According to an embodiment, the plurality of apps 296 stored in the memory 299 may be programs for performing designated functions. According to an embodiment, the plurality of apps 296 may include a first app 296-1 and a second app 296-2. According to an embodiment, each of the plurality of apps 296 may include a plurality of actions for performing the designated function. For example, the apps may include an alarm app, a messaging app, and/or a scheduler app. According to an embodiment, the plurality of apps 296 may be executed by the processor 292 to sequentially execute at least some of the plurality of operations.

According to an embodiment, the processor 292 may control the overall operation of the user terminal 290. For example, the processor 292 may be electrically connected with the communication interface 291, microphone 295, speaker 294, and display 293 to perform designated operations.

According to an embodiment, the processor 292 may execute the program stored in the memory 299 to perform a designated function. For example, the processor 292 may execute at least one of the client module 298 or the SDK 297 to perform the following operations for processing speech input. The processor 292 may control the operation of the plurality of apps 296 via, e.g., the SDK 297. The following operations described as operations of the client module 298 or SDK 297 may be operations according to the execution of the processor 292.

According to an embodiment, the client module 298 may receive a speech input. For example, the client module 298 may receive a speech signal corresponding to the user's utterance detected via the microphone 295. The client module 298 may transmit the received speech input to the intelligent server 200. The client module 298 may transmit state information about the user terminal 290 along with the received speech input to the intelligent server 200. The state information may be, e.g., app execution state information.

According to an embodiment, the client module 298 may receive a result corresponding to the received speech input. For example, if the intelligent server 200 may produce the result corresponding to the received speech input, the client module 298 may receive the result corresponding to the received speech input. The client module 298 may display the received result on the display 293.

According to an embodiment, the client module 298 may receive a plan corresponding to the received speech input. The client module 298 may display the results of execution of the plurality of operations of the app according to the plan on the display 293. The client module 298 may sequentially display, e.g., the results of execution of the plurality of operations on the display 293. As another example, the user terminal 290 may display only some results of execution of the plurality of operations (e.g., the result of the last operation) on the display 293.

According to an embodiment, the client module 298 may receive a request for obtaining information necessary to produce the result corresponding to the speech input from the intelligent server 200. According to an embodiment, the client module 298 may transmit the necessary information to the intelligent server 200 in response to the request.

According to an embodiment, the client module 298 may transmit information resultant from executing the plurality of operations according to the plan to the intelligent server 200. The intelligent server 200 may identify that the received speech input has been properly processed using the result information.

According to an embodiment, the client module 298 may include a speech recognition module. According to an embodiment, the client module 298 may recognize the speech input to perform a limited function via the speech recognition module. For example, the client module 298 may perform an intelligence app to process the speech input to perform organic operations via a designated input (e.g., Wake up!).

According to an embodiment, the intelligent server 200 may receive information related to the user speech input from the user terminal 290 via a communication network. According to an embodiment, the intelligent server 200 may convert the data related to the received speech input into text data. According to an embodiment, the intelligent server 200 may generate a plan for performing the task corresponding to the user speech input based on the text data.

According to an embodiment, the plan may be generated by an artificial intelligence (AI) system. The AI system may be a rule-based system or a neural network-based system (e.g., feedforward neural network (FNN)) or recurrent neutral network (RNN)). Or, the artificial intelligence system may be a combination thereof or a system different therefrom. According to an embodiment, the plan may be selected from a set of pre-defined plans or created in real-time in response to a user request. For example, the AI system may select at least one plan from among a plurality of pre-defined plans.

According to an embodiment, the intelligent server 200 may transmit the result according to the generated plan to the user terminal 290 or transmit the generated plan to the user terminal 290. According to an embodiment, the user terminal 290 may display the result according to the plan on the display 293. According to an embodiment, the user terminal 290 may display the result of execution of the operation according to the plan on the display 293.

According to an embodiment, the intelligent server 200 may include a front end 210, a natural language platform 220, a capsule database (DB) 230, an execution engine 240, an end user interface 250, a management platform 260, a bigdata platform 270, or an analytic platform 280.

According to an embodiment, the front end 210 may receive the speech input from the user terminal 290. The front end 210 may receive a response corresponding to the speech input.

According to an embodiment, the natural language platform 220 may include an automatic speech recognition module (ASR module) 221, a natural language understanding module (NLU module) 223, a planner module 225, a natural language generator module (NLG module) 227, or a text to speech module (TTS module) 229.

According to an embodiment, the ASR module 221 may convert the user input received from the user terminal 290 into text data. According to an embodiment, the NLU module 223 may grasp the user's intent using the text data of the speech input. For example, the natural language understanding module 223 may perform syntactic analysis or semantic analysis to grasp the user's intent. According to an embodiment, the NLU module 223 may grasp the meaning of a word extracted from the speech input using linguistic features (e.g., syntactic elements) of morphemes or phrases, match the grasped meaning of the word to the intent, and determine the user's intent.

According to an embodiment, the planner module 225 may generate a plan using the parameter and intent determined by the NLU module 223. According to an embodiment, the planner module 225 may determine a plurality of domains necessary to perform a task based on the determined intent. The planner module 225 may determine the plurality of operations included in the plurality of domains determined based on the intent. According to an embodiment, the planner module 225 may determine parameters necessary to execute the plurality of determined operations or resultant values output by execution of the plurality of operations. The parameters and resultant values may be defined in a designated format (or class) of concept. Thus, the plan may include the plurality of operations determined by the user's intent and a plurality of concepts. The planner module 225 may operatively (or hierarchically) determine the relationship between the plurality of operations and the plurality of concepts. For example, the planner module 225 may determine the order of execution of the plurality of operations determined based on the user's intent based on the plurality of concepts. In other words, the planner module 225 may determine the order of execution of the plurality of operations based on the result output by execution of the plurality of operations and the parameters necessary to execute the plurality of operations. Thus, the planner module 225 may generate a plan that contains association information (e.g., ontology) between the plurality of operations and the plurality of concepts. A plan may be generated using information stored in the capsule DB 230 that stores a set of concept-operation relationships.

According to an embodiment, the NLG module 227 may convert designated information into a text type. The text-type information may be in the form of a natural language utterance. According to an embodiment, the TTS module 229 may convert text-type information into speech-type information.

According to an embodiment, all or some of the functions of the natural language platform 220 may also be implemented in the user terminal 290.

The capsule DB 230 may store information about the relationship between the plurality of concepts and operations corresponding to the plurality of domains. According to an embodiment, the capsule may include a plurality of concept objects (or concept information) and a plurality of action objects (or action information) included in the plan. According to an embodiment, the capsule DB 230 may store a plurality of capsules in the form of a concept action network (CAN). According to an embodiment, the plurality of capsules may be stored in a function registry included in the capsule DB 230.

The capsule DB 230 may include a strategy registry storing strategy information necessary to determine the plan corresponding to the speech input. The strategy information may include reference information for determining one plan if there are a plurality of plans corresponding to the speech input. According to an embodiment, the capsule DB 230 may include a follow up registry storing follow up information to propose a subsequent action to the user in a designated context. The subsequent action may include, e.g., a subsequent utterance. According to an embodiment, the capsule DB 230 may include a layout registry storing layout information about the information output via the user terminal 290. According to an embodiment, the capsule database 230 may include a vocabulary registry storing vocabulary information included in capsule information. According to an embodiment, the capsule DB 230 may include a dialog registry storing dialog (or interaction) information with the user. The capsule DB 230 may update the stored object via a developer tool. The developer tool may include a function editor for updating, e.g., the action object or concept object. The developer tool may include a vocabulary editor for updating the vocabulary. The developer tool may include a strategy editor to generate and register a strategy to determine a plan. The developer tool may include a dialog editor to generate a dialog with the user. The developer tool may include a follow up editor capable of activating a subsequent goal and editing a subsequent utterance to provide a hint. The subsequent goal may be determined based on the current goal, the user's preference, or environmental conditions. According to an embodiment, the capsule DB 230 may also be implemented in the user terminal 290.

According to an embodiment, the execution engine 240 may produce a result using the generated plan. The end user interface 250 may transmit the produced result to the user terminal 290. Thus, the user terminal 290 may receive the result and provide the received result to the user. According to an embodiment, the management platform 260 may manage information used in the intelligent server 200. According to an embodiment, the bigdata platform 270 may gather user data. According to an embodiment, the analytic platform 280 may manage the quality of service (QoS) of the intelligent server 200. For example, the analytic platform 280 may manage the components and processing speed (or efficiency) of the intelligent server 200.

According to an embodiment, the service server 300 may provide a designated service (e.g., food ordering or hotel booking) to the user terminal 290. According to an embodiment, the service server 300 may be a server operated by a third party. According to an embodiment, the service server 300 may provide information for generating the plan corresponding to the received speech input to the intelligent server 200. The provided information may be stored in the capsule DB 230. The service server 300 may provide result information according to the plan to the intelligent server 200.

In the above-described integrated intelligence system 10, the user terminal 290 may provide various intelligent services to the user in response to user inputs. The user inputs may include, e.g., inputs using physical buttons, touch inputs, or speech inputs.

According to an embodiment, the user terminal 290 may provide a speech recognition service via an intelligence app (or speech recognition app) stored therein. In this case, for example, the user terminal 290 may recognize the user utterance or speech input received via the microphone and provide the service corresponding to the recognized speech input to the user.

According to an embodiment, the user terminal 290 may perform a designated operation, alone or together with the intelligent server 200 and/or service server 300, based on the received speech input. For example, the user terminal 290 may execute the app corresponding to the received speech input and perform a designated operation via the executed app.

According to an embodiment, when the user terminal 290, together with the intelligent server 200 and/or service server 300, provides the service, the user terminal 290 may detect a user utterance using the microphone 295 and generate a signal (or speech data) corresponding to the detected user utterance. The user terminal 290 may transmit the speech data to the intelligent server 200 via the communication interface 291.

According to an embodiment, in response to the speech input received from the user terminal 290, the intelligent server 200 may generate a plan for performing the task corresponding to the speech input or the result of the operation performed according to the plan. The plan may include a plurality of actions for performing the task corresponding to the user's speech input and a plurality of concepts related to the plurality of actions. The concept may be one defining parameters input upon execution of the plurality of actions or one defining the resultant value output by execution of the plurality of actions. The plan may include association information between the plurality of actions and the plurality of concepts.

According to an embodiment, the user terminal 290 may receive the response via the communication interface 291. The user terminal 290 may output the speech signal generated inside the user terminal 290 to the outside using the speaker 294 or may output the image generated inside the user terminal 290 to the outside using the display 293.

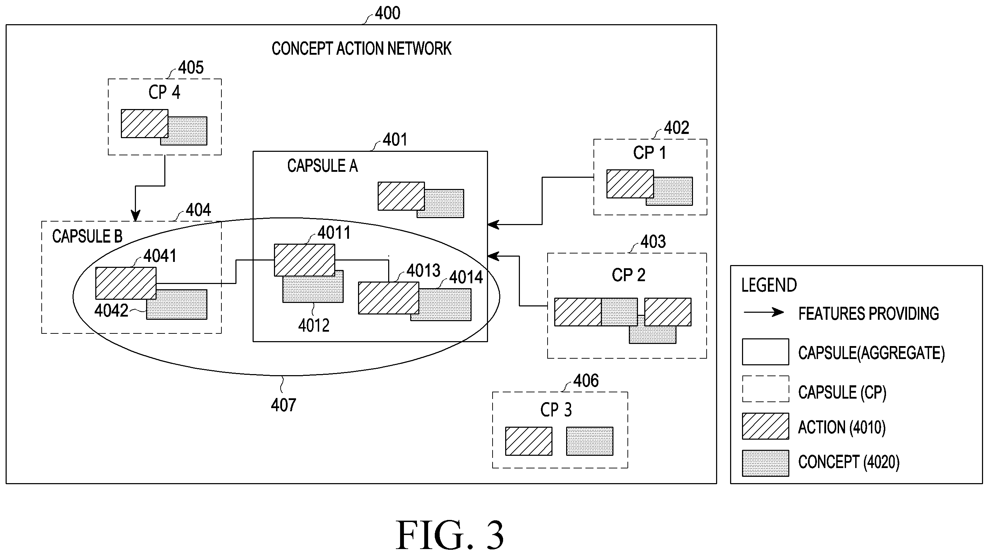

FIG. 3 is a diagram illustrating an example in which information for the relationship between concept and action is stored in a database according to an embodiment.

A capsule database (e.g., the capsule database 230) of the intelligent server 200 may store capsules in the form of a concept action network (CAN). The capsule database may store an operation for processing a task corresponding to the user's speech input and a parameter necessary for the operation in the form of the concept action network (CAN).

The capsule database according to an embodiment may store a plurality of capsules (capsule(A) 401 and capsule(B) 404) respectively corresponding to a plurality of domains (e.g., applications). According to an embodiment, one capsule (e.g., capsule(A) 401) may correspond to one domain (e.g., location (geo), application). Further, one capsule may correspond to at least one service provider (e.g., CP 1 402 or CP 2 403) for performing a function for a domain related to the capsule. According to an embodiment, one capsule may include at least one or more actions 410 and at least one or more concepts 420 for performing a designated function.

The natural language platform 220 may generate a plan for performing a task corresponding to the received speech input using a capsule stored in the capsule database. For example, the planner module 225 of the natural language platform may generate a plan using a capsule stored in the capsule database. For example, a plan 407 may be generated using operations 4011 and 4013 and concepts 4012 and 4014 of capsule A 410 and an operation 4041 and concept 4042 of capsule B 404.

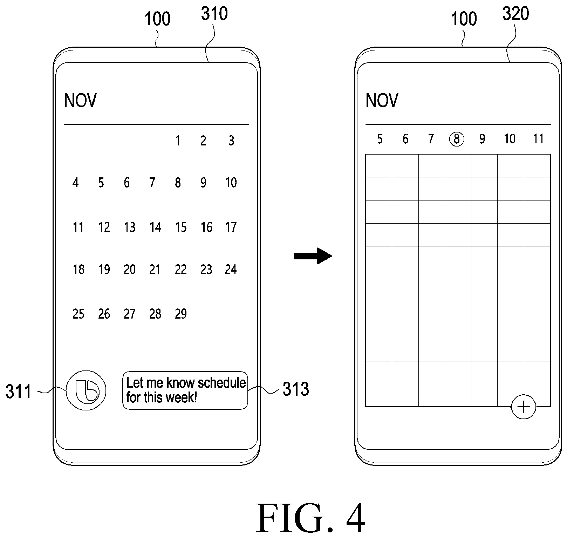

FIG. 4 is a diagram illustrating a screen in which a user terminal processes a speech input received through an intelligent app according to an embodiment.

The user terminal 290 may execute an intelligent app to process user inputs through the intelligent server 200.

According to an embodiment, upon recognizing a designated speech input (e.g., a wakeup) or receiving an input through a hardware key (e.g., a dedicated hardware key) on a screen 310, the user terminal 290 may execute the intelligent app to process the speech input. The user terminal 290 may, e.g., execute an intelligent app in a state in which a schedule app is executed. According to an embodiment, the user terminal 290 may display an object (e.g., icon) 311 corresponding to the intelligent app on the display 293. According to an embodiment, the user terminal 290 may receive a speech input by a user utterance. For example, the user terminal 290 may receive a speech input saying "Tell me this week's schedule!". According to an embodiment, the user terminal 290 may display a user interface (UI) 313 (e.g., input window) of the intelligent app displaying the text data of the received speech input on the display.

According to an embodiment, on a screen 320, the user terminal 290 may display a result corresponding to the received speech input on the display. For example, the user terminal 290 may receive the plan corresponding to the received user input, and display a 'this week's schedule' on the display according to the plan.

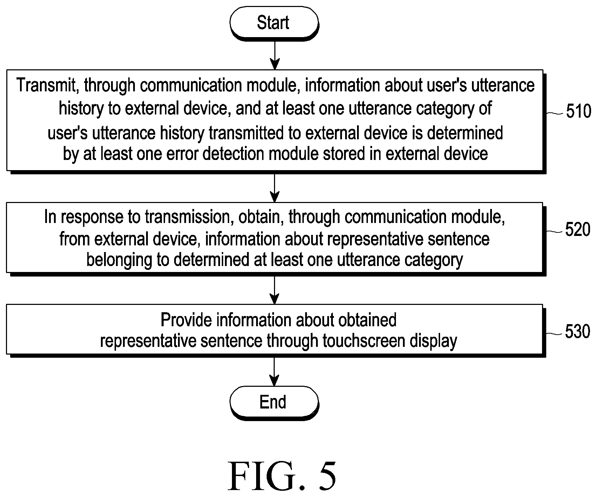

FIG. 5 is an example diagram illustrating a function or operation in which the electronic device 101 provides a representative utterance sentence according to an utterance category based on an utterance log according to an embodiment of the present disclosure.

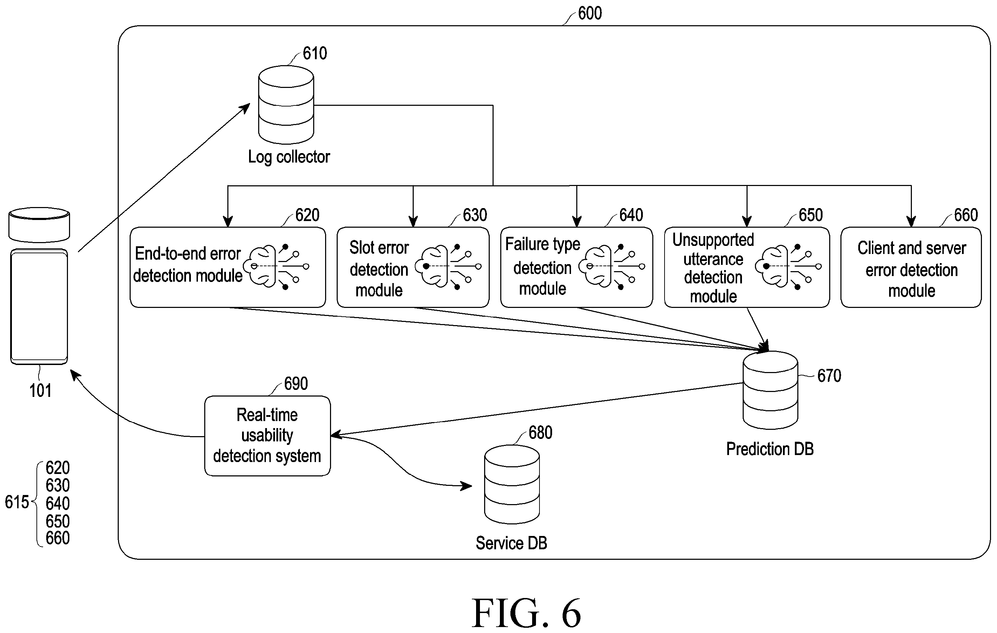

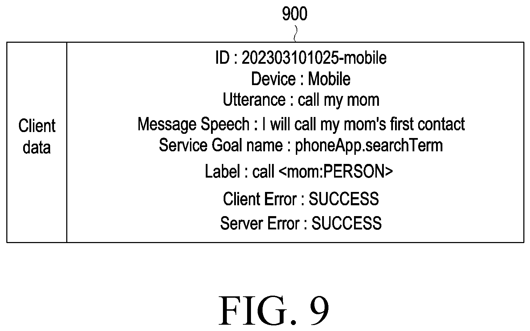

Referring to FIG. 5, the electronic device 101 according to an embodiment of the present disclosure may transmit, in operation 510, information about a user's utterance history to an external device (e.g., the server 108) through the communication module. For example, the electronic device 101 according to an embodiment of the present disclosure may transmit utterance log information 900 to the external device. The utterance log information 900 according to an embodiment of the present disclosure may be stored in the electronic device. FIG. 9 is an example diagram illustrating the utterance log information 900 according to an embodiment of the present disclosure. Referring to FIG. 9, the utterance log information 900 according to an embodiment of the present disclosure may include at least one of utterance ID information, device information, user's utterance information, response information of an intelligent service, a label, client error information, and/or server error information. At least one utterance category of the utterance history information 900 according to an embodiment of the present disclosure may be determined by at least one error detection module 615 stored in the external device (e.g., the server 108). FIG. 6 is an example diagram illustrating a configuration of an intelligence system according to an embodiment of the present disclosure. Referring to FIG. 6, the error detection module according to an embodiment of the present disclosure may include at least one module among an end-to-end error detection module 620, a slot error detection module 630, a failure type detection module 640, an unsupported utterance detection module 650, and/or a client and server error detection module 650. Further, an intelligent external device 600 (e.g., the server 108 of FIG. 1) according to an embodiment of the present disclosure may include at least one of a log collector 610 configured to obtain utterance history information from the electronic device 101, a prediction database 670 configured to store results from the error detection module 615, and/or a real-time usability detection system 690 integrating results from the error detection module 615 and transmitting an integrated result.

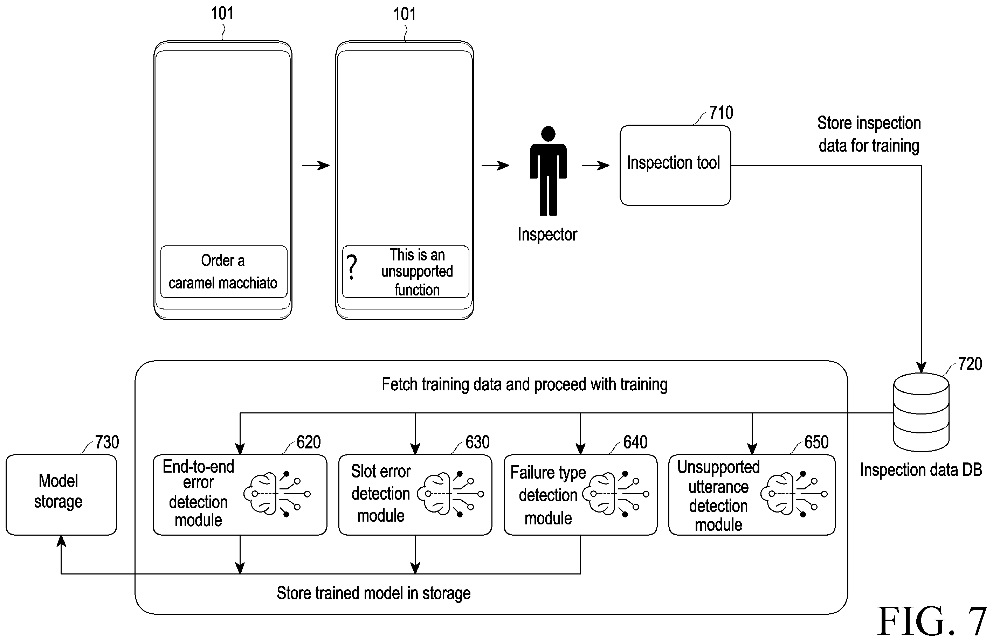

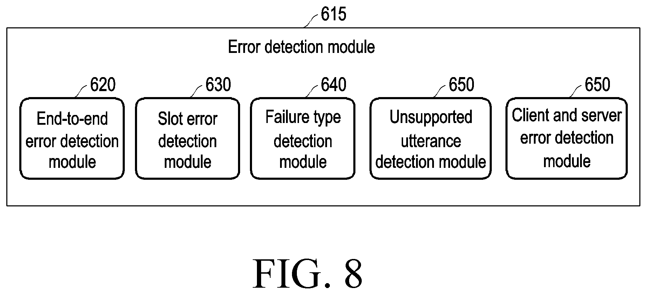

FIG. 7 is an example diagram illustrating a function or operation in which the error detection module 615 is generated and/or trained according to an embodiment of the present disclosure. FIG. 8 is an example diagram illustrating the error detection module according to an embodiment of the present disclosure. Referring to FIGS. 7 and 8, the electronic device 101 according to an embodiment of the present disclosure may obtain an utterance of "Order a caramel macchiato" as a user utterance. The electronic device 101 according to an embodiment of the present disclosure may output a message indicating that such a user utterance is an utterance not supported by the intelligent service. Such an output result may be stored in the electronic device 101. The electronic device 101 according to an embodiment of the present disclosure may transmit such utterance history information to an inspector (e.g., an inspection server). The utterance history information according to an embodiment of the present disclosure may be transmitted to the inspector from other electronic devices except for the electronic device 101. The inspector according to an embodiment of the present disclosure may perform inspection on the utterance history information using an inspection tool 710. The inspector according to an embodiment of the present disclosure may store an inspection result in an inspection database 720. The inspection result according to an embodiment of the present disclosure may be transmitted to the error detection module 615. The error detection module 615 (e.g., the end-to-end error detection module 620, the slot error detection module 630, the failure type detection module 640, the unsupported utterance detection module 650, and/or the client and server error detection module 650) according to an embodiment of the present disclosure may be trained by the inspection result. A training result according to an embodiment of the present disclosure may be stored in a model storage 730 included in the intelligent external device.

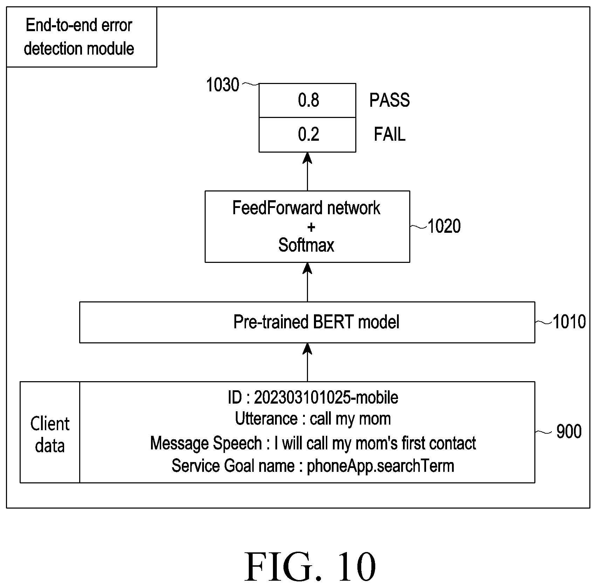

FIG. 10 is an example diagram illustrating a function or operation of the end-to-end error detection module 620 according to an embodiment of the present disclosure. Referring to FIG. 10, the utterance log information 900 according to an embodiment of the present disclosure may be input to a pre-trained bi-directional encoder representation from transformer (BERT) model 1010. The user utterance history information 900 as an output result of the pre-trained BERT model 1010 according to an embodiment of the present disclosure may be input to a feed forward network (FNN) module 1020. The user utterance history information 900 as an output result of the FNN module 1020 according to an embodiment of the present disclosure may be classified as utterance success or utterance failure and output. In this case, the output result according to an embodiment of the present disclosure may be output as an utterance success probability and/or an utterance failure probability. According to such a function or operation, the end-to-end error detection module 620 according to an embodiment of the present disclosure may determine a result as to whether a process for the user utterance succeeded or failed end-to-end. The end-to-end error detection module 620 according to an embodiment of the present disclosure may output the determination result to the integration module 1510.

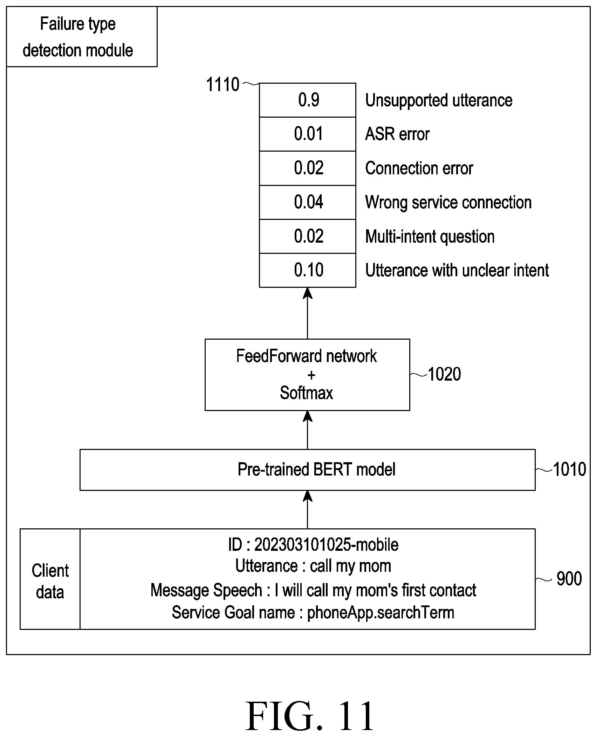

FIG. 11 is an example diagram illustrating a function or operation of the failure type detection module 630 according to an embodiment of the present disclosure. Referring to FIG. 11, the utterance log information 900 according to an embodiment of the present disclosure may be input to a pre-trained bi-directional encoder representation from transformer (BERT) model 1010. The user utterance history information 900 as an output result of the pre-trained BERT model 1010 according to an embodiment of the present disclosure may be input to a feed forward network (FNN) module 1020. The user utterance history information 900 as an output result of the FNN module 1020 according to an embodiment of the present disclosure may be classified as a type of utterance failure and output. In this case, the output result according to an embodiment of the present disclosure may include probabilities of failure types such as "utterance with unclear intent", "multi-intent question", "wrong service connection", "connection error", "ASR error", and/or "unsupported utterance". A function or operation performed by other modules (e.g., the unsupported utterance detection module 650) according to an embodiment of the present disclosure may be performed as at least a portion of a function or operation performed by the failure type detection module 630. According to such a function or operation, the failure type detection module 640 according to an embodiment of the present disclosure may determine a result for a failure type of the user utterance. The failure type detection module 640 according to an embodiment of the present disclosure may output the determination result to the integration module 1510.

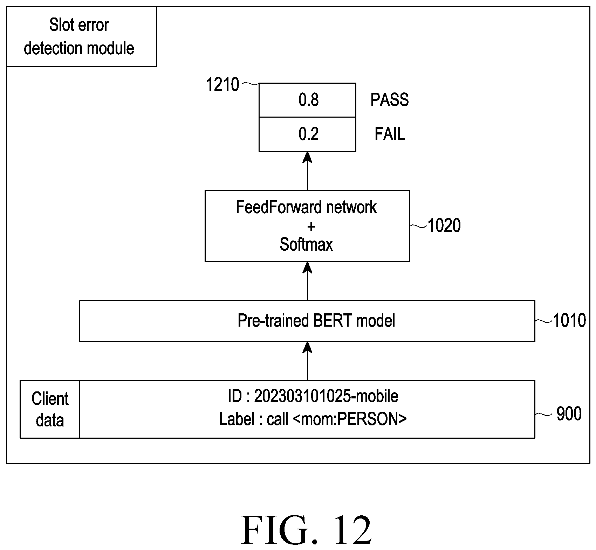

FIG. 12 is an example diagram illustrating a function or operation of the slot error detection module 630 according to an embodiment of the present disclosure. Referring to FIG. 12, the utterance log information 900 according to an embodiment of the present disclosure may be input to the pre-trained BERT model 1010. The user utterance history information 900 as an output result of the pre-trained BERT model 1010 according to an embodiment of the present disclosure may be input to a feed forward network (FNN) module 1020. The user utterance history information 900 as an output result of the FNN module 1020 according to an embodiment of the present disclosure may be classified as utterance success or utterance failure and output. In this case, the output result according to an embodiment of the present disclosure may be output as an utterance success probability and/or an utterance failure probability. According to such a function or operation, the end-to-end error detection module 620 according to an embodiment of the present disclosure may determine a result as to whether a slot error (e.g., whether tagging for a specific parameter (e.g., "mom") was correctly performed) existed in a process for the user utterance. The slot error detection module 630 according to an embodiment of the present disclosure may output the determination result to the integration module 1510.

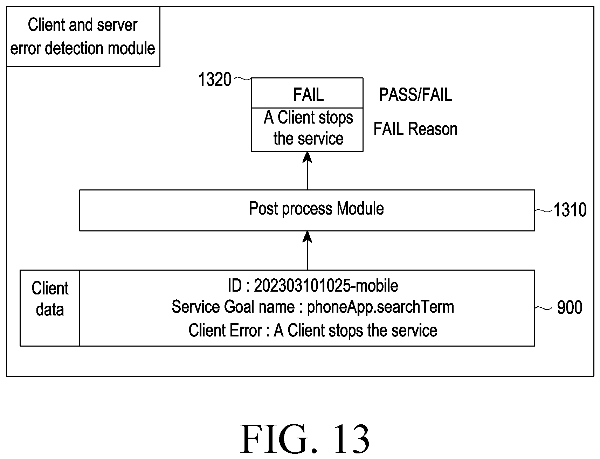

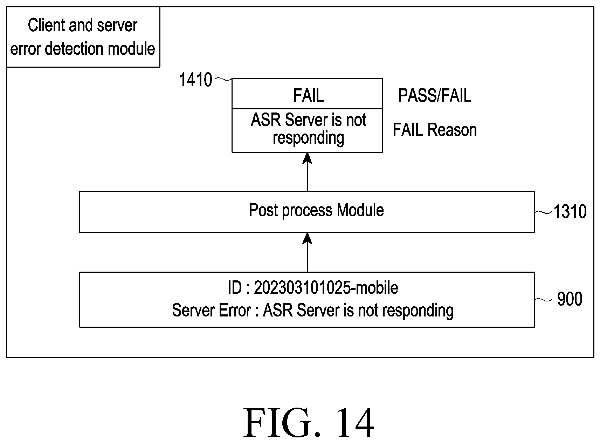

FIGS. 13 and 14 are example diagrams illustrating a function or operation of the client and server error detection module 660 according to an embodiment of the present disclosure. Referring to FIGS. 13 and 14, the utterance log information 900 according to an embodiment of the present disclosure may be input to a post-processing module 1310. The user utterance history information 900 as an output result of the post-processing module 1310 according to an embodiment of the present disclosure may be classified as utterance success or utterance failure and output. According to such a function or operation, the client and server error detection module 660 according to an embodiment of the present disclosure may determine a result as to whether an error existed in the client and/or server for a process for the user utterance. The client and server error detection module 660 according to an embodiment of the present disclosure may output the determination result to the integration module 1510. The client error according to an embodiment of the present disclosure may include, e.g., an error event such as whether the user intentionally terminated the intelligent service. The client and server error detection module 660 according to an embodiment of the present disclosure may predict success despite the intelligent service being terminated, when it is identified that the termination of the intelligent service is the user's intention by identifying a client error log. The client and server error detection module 660 according to an embodiment of the present disclosure may be configured as separate modules.

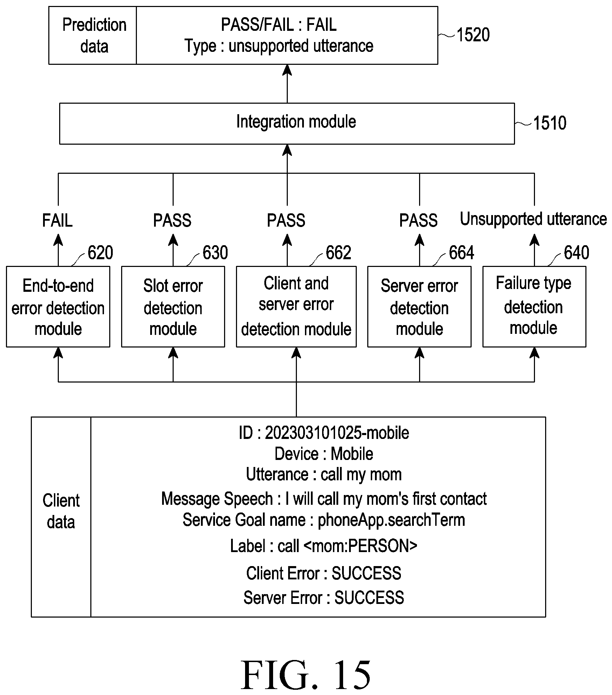

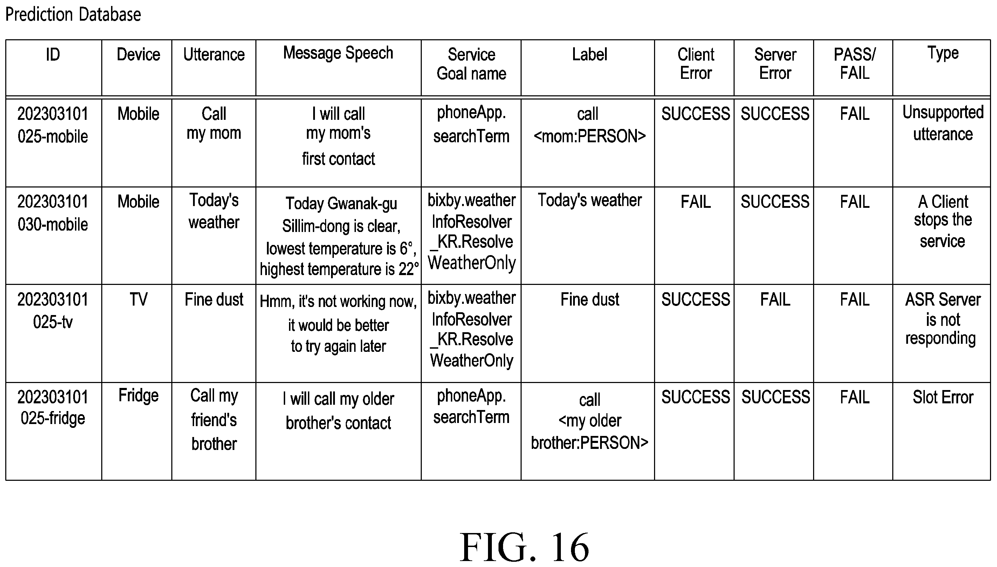

FIG. 15 is an example diagram illustrating a function or operation of the integration module 1510 according to an embodiment of the present disclosure. FIG. 16 is an example diagram illustrating a data format stored in a prediction database according to an embodiment of the present disclosure. Referring to FIG. 15, the integration module 1510 according to an embodiment of the present disclosure may integrate results of the error detection module 615 (e.g., the end-to-end error detection module 620, the slot error detection module 630, the failure type detection module 640, the unsupported utterance detection module 650, and/or the client and server error detection module 650) and output the integrated result as prediction data 1520. According to an embodiment of the present disclosure, as illustrated in FIG. 15, when a failure result is output by the end-to-end error detection module 620 and the failure type is predicted as an unsupported utterance by the failure type detection module 640, the prediction data 1520 may include a result of "utterance failure" as an utterance category. Further, the prediction data 1510 according to an embodiment of the present disclosure may include at least one reason among "end-to-end error" and/or "unsupported utterance" as a failure type for a failure reason. The integration module 1510 according to an embodiment of the present disclosure may be configured to be included in the real-time usability detection system 690. Referring to FIG. 16, "Device" may be a name of a device on which the corresponding utterance operated. "Utterance" may mean a sentence uttered by the user through the intelligent service. "Message Speech" may mean a sentence responded by the intelligent service to the user utterance. "Service Goal name" may mean a name of an application, a domain, a service, a module, or a function provided by the intelligent service. "Label" may mean a value of a variable used by the intelligent service among the user utterance. "Client Error" and "Server Error" may mean an error value output from the client and an error value output from the server. "PASS/FAIL" may mean a success/failure value for the corresponding utterance determined by the integration module 1510. "Type" may mean a category indicating for what reason the utterance failed when the utterance failed.

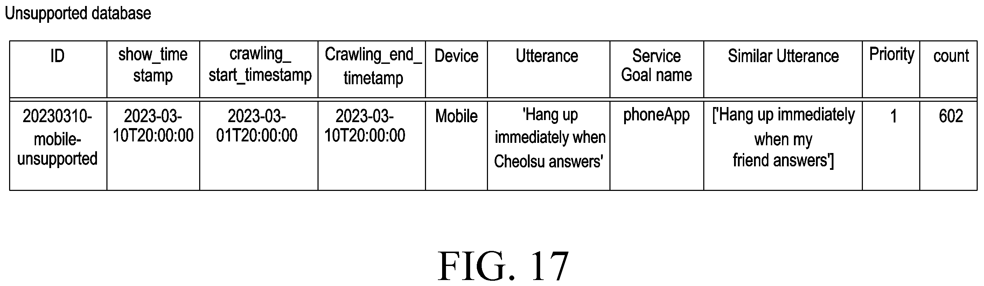

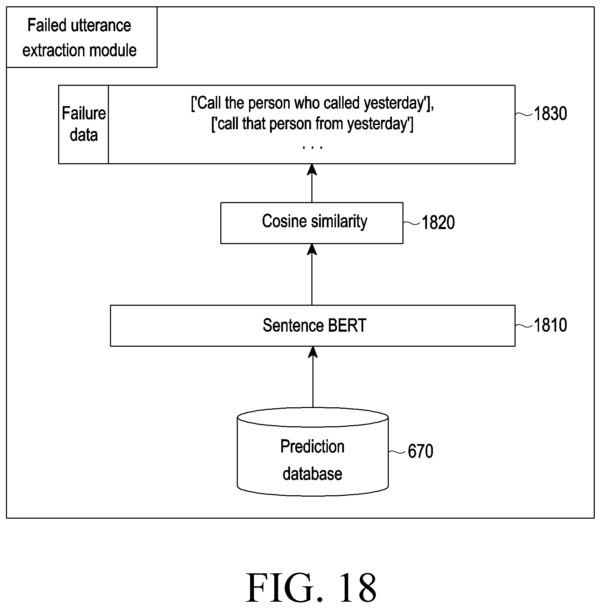

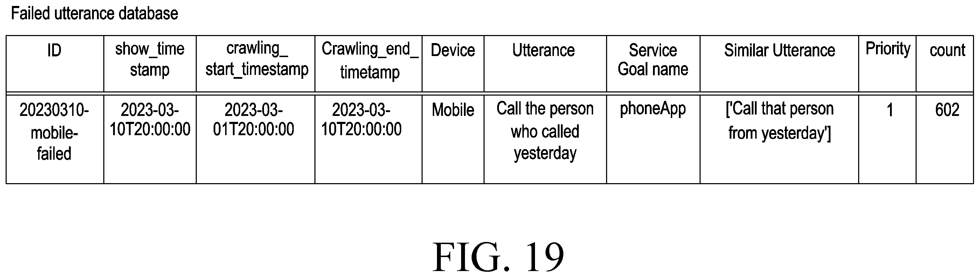

FIG. 17 is an example diagram illustrating a data format for "unsupported utterance" as an utterance category transmitted to the electronic device 101 according to an embodiment of the present disclosure. FIG. 18 is an example diagram illustrating a function or operation of the failed utterance extraction module according to an embodiment of the present disclosure. FIG. 19 is an example diagram illustrating a data format for "failed utterance" as an utterance category transmitted to the electronic device 101 according to an embodiment of the present disclosure. Referring to FIG. 17, information about the unsupported utterance according to an embodiment of the present disclosure may be transmitted to the electronic device 101 in a data format as illustrated in FIG. 17. Referring to FIGS. 17 and 19, "Device" may be a name of a device on which the corresponding utterance operated. "Utterance" may mean a sentence uttered by the user through the intelligent service. "Service Goal name" may mean a name of an application, a domain, a service, a module, or a function provided by the intelligent service. "similar utterance" may mean an utterance similar to the user's utterance. Such a similar utterance may be determined by the failed utterance extraction module illustrated in FIG. 18. The failed utterance extraction module according to an embodiment of the present disclosure may be configured to be included in the intelligent external device 600. Referring to FIG. 18, the failed utterance extraction module according to an embodiment of the present disclosure may obtain information about failed utterances (e.g., "Call the person who called yesterday", "What is the phone number of the person who called earlier?") from the prediction database 670. The failed utterance extraction module according to an embodiment of the present disclosure may extract and/or determine an utterance similar to the failed utterance using a sentence BERT module 1810 and a cosine similarity module 1820. The similar utterance (e.g., "Call that person from yesterday") determined according to an embodiment of the present disclosure may be output as failure data 1830. The failure data 1830 according to an embodiment of the present disclosure may be transmitted to the electronic device 101 by the intelligent external device 600. The intelligent external device 600 (e.g., the failed utterance extraction module) according to an embodiment of the present disclosure may determine at least one representative utterance sentence to be transmitted to the electronic device 101 among "failed utterance" and "similar utterance".

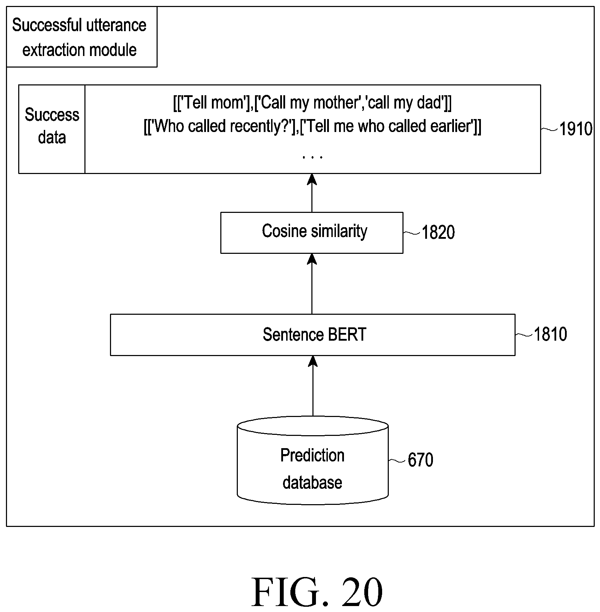

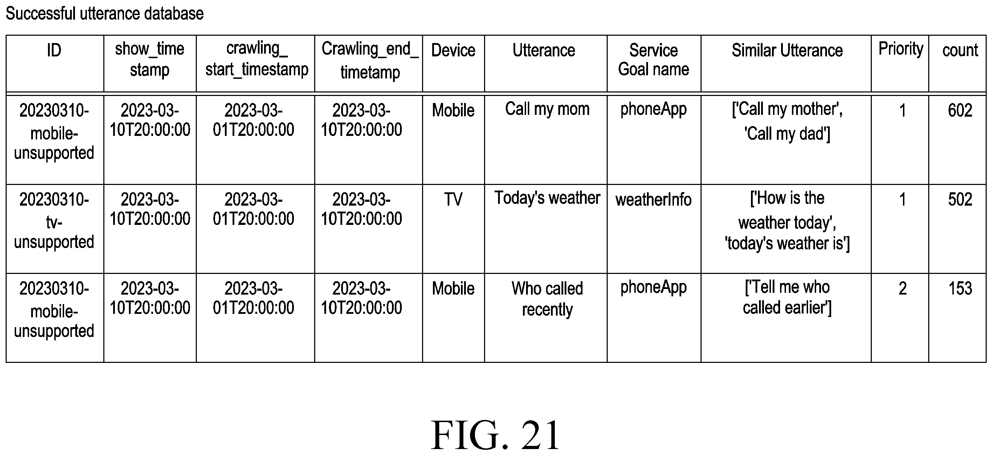

FIG. 20 is an example diagram illustrating a function or operation of the successful utterance extraction module according to an embodiment of the present disclosure. FIG. 21 is an example diagram illustrating a data format for "successful utterance" as an utterance category transmitted to the electronic device according to an embodiment of the present disclosure. Referring to FIG. 21, information about the successful utterance according to an embodiment of the present disclosure may be transmitted to the electronic device 101 in a data format as illustrated in FIG. 21. Referring to FIG. 21, "Device" may be a name of a device on which the corresponding utterance operated. "Utterance" may mean a sentence uttered by the user through the intelligent service. "Service name" may mean a name of an application, a domain, a service, a module, or a function provided by the intelligent service. "similar utterance" may mean an utterance similar to the user's utterance. Such a similar utterance may be determined by the successful utterance extraction module illustrated in FIG. 20. The successful utterance extraction module according to an embodiment of the present disclosure may be configured to be included in the intelligent external device 600. Referring to FIG. 20, the successful utterance extraction module according to an embodiment of the present disclosure may obtain information about successful utterances (e.g., "Call my mom", "Call my mother") from the prediction database 670. The successful utterance extraction module according to an embodiment of the present disclosure may extract and/or determine an utterance similar to the successful utterance using the sentence BERT module 1810 and the cosine similarity module 1820. The similar utterance (e.g., "Tell me who called earlier") determined according to an embodiment of the present disclosure may be output as success data 1910. The success data 1910 according to an embodiment of the present disclosure may be transmitted to the electronic device 101 by the intelligent external device 600. The intelligent external device 600 (e.g., the successful utterance extraction module) according to an embodiment of the present disclosure may determine at least one representative utterance sentence to be transmitted to the electronic device 101 among "successful utterance" and "similar utterance".

Referring back to FIG. 2, the electronic device 101 according to an embodiment of the present disclosure may obtain, in response to the transmission according to operation 510, information about a representative sentence belonging to the determined at least one utterance category from the external device (e.g., the intelligent external device 600) through the communication module 190. The utterance similar to the failed utterance (e.g., "Call that person from yesterday") determined according to an embodiment of the present disclosure may be output as failure data 1830. The failure data 1830 according to an embodiment of the present disclosure may be transmitted to the electronic device 101 by the intelligent external device 600. The intelligent external device 600 (e.g., the failed utterance extraction module) according to an embodiment of the present disclosure may determine at least one representative utterance sentence to be transmitted to the electronic device 101 among "failed utterance" and "similar utterance". Further, the utterance similar to the successful utterance (e.g., "Tell me who called earlier") determined according to an embodiment of the present disclosure may be output as success data 1910. The success data 1910 according to an embodiment of the present disclosure may be transmitted to the electronic device 101 by the intelligent external device 600. The intelligent external device 600 (e.g., the successful utterance extraction module) according to an embodiment of the present disclosure may determine at least one representative utterance sentence to be transmitted to the electronic device 101 among "successful utterance" and "similar utterance".

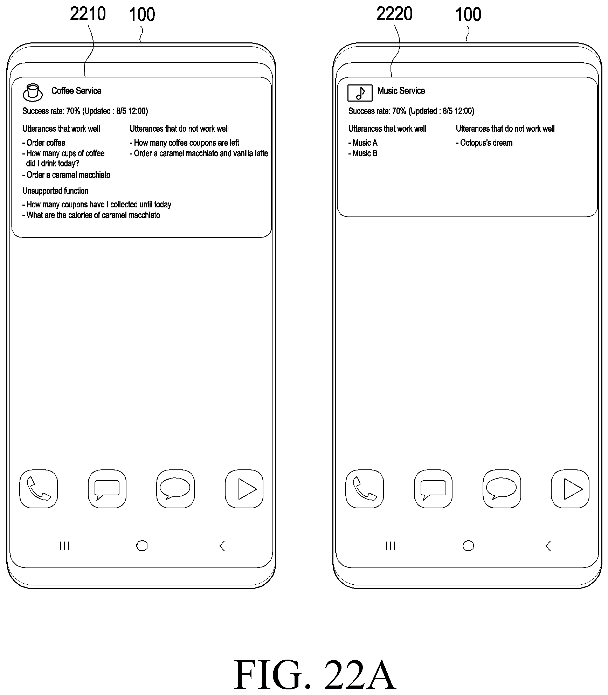

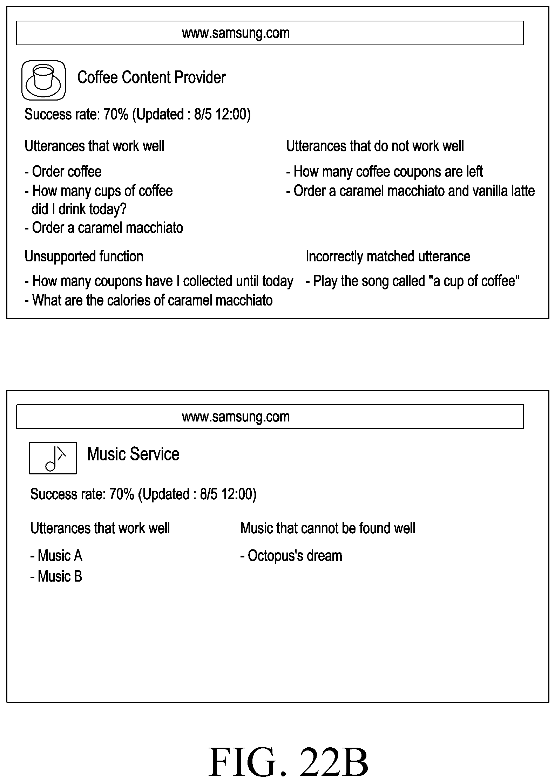

Referring to FIG. 2, the electronic device 101 according to an embodiment of the present disclosure may provide, in operation 530, information about the obtained representative utterance sentence through the touchscreen display. The representative utterance sentence according to an embodiment of the present disclosure may be displayed as classified according to the utterance category. FIG. 22A is an example diagram illustrating an utterance category and at least one representative utterance sentence provided through the electronic device 101 according to an embodiment of the present disclosure. FIG. 22B is an example diagram illustrating an utterance category and at least one representative utterance sentence provided through a website according to an embodiment of the present disclosure. Referring to FIG. 22A, information about "successful utterance" (e.g., "utterances that work well"), "failed utterance" (e.g., "utterances that do not work well"), "unsupported utterance" (e.g., "unsupported function"), and/or an utterance success rate may be provided through the electronic device 101. Referring to FIG. 22A, information about "successful utterance" (e.g., "utterances that work well"), "failed utterance" (e.g., "utterances that do not work well"), "unsupported utterance" (e.g., "unsupported function"), and/or an utterance success rate related to a designated application may be provided through a designated application (e.g., a coffee service application and/or an intelligent service application) through the electronic device 101. Further, referring to FIG. 22A, information about "successful utterance" (e.g., "utterances that work well"), "failed utterance" (e.g., "utterances that do not work well"), and/or an utterance success rate related to a designated application may be provided through a designated application (e.g., a music service application and/or an intelligent service application) through the electronic device 101. Referring to FIG. 22B, information about "successful utterance" (e.g., "utterances that work well"), "failed utterance" (e.g., "utterances that do not work well"), "unsupported utterance" (e.g., "unsupported function"), and/or an utterance success rate related to a designated application may also be provided through a designated website (e.g., www.samsung.com) through the electronic device 101.

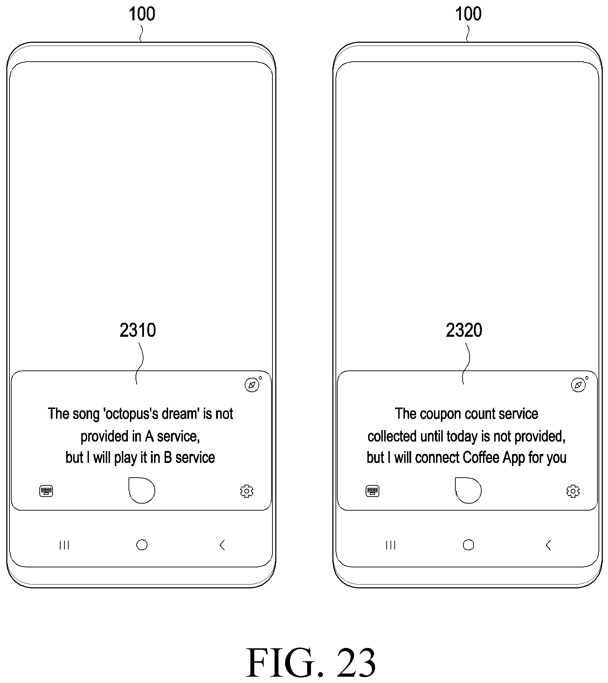

FIG. 23 is an example diagram illustrating a function or operation providing a service related to an unsupported utterance when the unsupported utterance is obtained according to an embodiment of the present disclosure. Referring to FIG. 23, when an unsupported utterance related to a designated application or an utterance similar to the unsupported utterance is obtained, the electronic device 101 according to an embodiment of the present disclosure may output a first message 2310 indicating that another application related to the designated application is executed. Alternatively, when an unsupported utterance related to a designated application or an utterance similar to the unsupported utterance is obtained, the electronic device 101 according to an embodiment of the present disclosure may output a second message 2320 indicating that the designated application is executed without performing a task according to the user utterance. When an unsupported utterance related to a designated application or an utterance similar to the unsupported utterance is obtained, the electronic device 101 according to an embodiment of the present disclosure may execute another application supporting a task according to the unsupported utterance or execute the designated application without performing a task according to the user utterance. Information about the designated application and/or another application according to an embodiment of the present disclosure may be transmitted from the intelligent external device 600 to the electronic device 101.

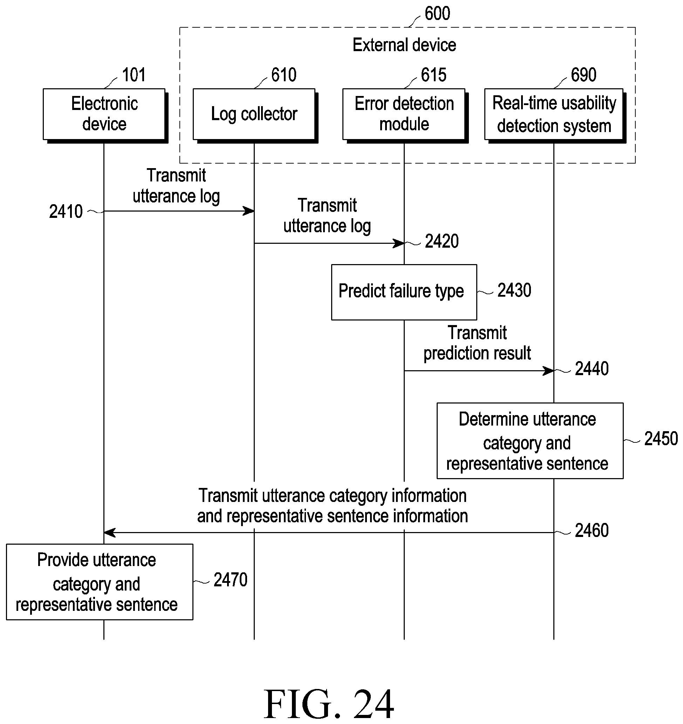

FIG. 24 is a system flowchart illustrating a function or operation in which the electronic device provides a representative utterance sentence according to an utterance category based on an utterance log according to an embodiment of the present disclosure.

Referring to FIG. 24, in operation 2410, the electronic device according to an embodiment of the present disclosure may transmit information about an utterance log stored in the electronic device 101 to the intelligent external device 600. In operation 2420, the intelligent external device 600 (e.g., the log collector 610) according to an embodiment of the present disclosure may transmit the obtained utterance log to the error detection module 615 (e.g., the end-to-end error detection module 620, the slot error detection module 630, the failure type detection module 640, the unsupported utterance detection module 650, and/or the client and server error detection module 650). In operation 2430, the intelligent external device 600 (e.g., the error detection module 615) according to an embodiment of the present disclosure may predict a failure type. For example, the utterance log information 900 according to an embodiment of the present disclosure may be input to the pre-trained BERT model 1010. The user utterance history information 900 as an output result of the pre-trained BERT model 1010 according to an embodiment of the present disclosure may be input to a feed forward network (FNN) module 1020. The user utterance history information 900 as an output result of the FNN module 1020 according to an embodiment of the present disclosure may be classified as a type of utterance failure and output. In this case, the output result according to an embodiment of the present disclosure may include probabilities of failure types such as "utterance with unclear intent", "multi-intent question", "wrong service connection", "connection error", "ASR error", and/or "unsupported utterance". In operation 2340, the intelligent external device 600 (e.g., the error detection module 615) according to an embodiment of the present disclosure may transmit the result predicted according to operation 2430 to the real-time usability detection system 690. In operation 2450, the real-time usability detection system 690 according to an embodiment of the present disclosure may determine an utterance category and a representative utterance sentence. The intelligent external device 600 (e.g., the failed utterance extraction module) according to an embodiment of the present disclosure may determine at least one representative utterance sentence to be transmitted to the electronic device 101 among "failed utterance" and "similar utterance". The intelligent external device 600 (e.g., the successful utterance extraction module) according to an embodiment of the present disclosure may determine at least one representative utterance sentence to be transmitted to the electronic device 101 among "successful utterance" and "similar utterance". The intelligent external device 600 (e.g., the successful utterance extraction module) according to an embodiment of the present disclosure may determine at least one representative utterance sentence to be transmitted to the electronic device 101 among "unsupported utterance" and "similar utterance". In operation 2460, the real-time usability detection system 690 according to an embodiment of the present disclosure may transmit utterance category information and representative utterance sentence information to the electronic device 101. The electronic device 101 according to an embodiment of the present disclosure may provide the utterance category and the representative utterance sentence. According to an embodiment of the present disclosure, information about "successful utterance" (e.g., "utterances that work well"), "failed utterance" (e.g., "utterances that do not work well"), "unsupported utterance" (e.g., "unsupported function"), and/or an utterance success rate may be provided through the electronic device 101. Through such functions or operations, when the electronic device 101 obtains an utterance according to a guide utterance (e.g., an utterance included in the "Try saying this" item), a technical effect of allowing the user to know whether a response may be normally received "now" may be achieved.

The electronic device (e.g., the electronic device 101 of FIG. 1) according to an embodiment of the present disclosure includes a touchscreen display (e.g., the display module 160 of FIG. 1), a communication module (e.g., the communication module 190 of FIG. 1), and a processor (e.g., the processor 120 of FIG. 1), and the processor may be configured to transmit, through the communication module, information about a user's utterance history to an external device, wherein at least one utterance category of the user's utterance history transmitted to the external device is determined by at least one error detection module stored in the external device, in response to the transmission, obtain, through the communication module, from the external device, information about a representative sentence belonging to the determined at least one utterance category, and provide the information about the obtained representative sentence through the touchscreen display.

A method for controlling an electronic device according to an embodiment of the present disclosure may include an operation of transmitting, through a communication module of the electronic device, information about a user's utterance history to an external device, an operation of, wherein at least one utterance category of the user's utterance history transmitted to the external device is determined by at least one error detection module stored in the external device, in response to the transmission, obtaining, through the communication module, from the external device, information about a representative sentence belonging to the determined at least one utterance category, and an operation of providing the information about the obtained representative sentence through a touchscreen display of the electronic device.

The electronic device according to various embodiments of the disclosure may be one of various types of electronic devices. The electronic devices may include, for example, a portable communication device (e.g., a smart phone), a computer device, a portable multimedia device, a portable medical device, a camera, a wearable device, or a home appliance. The electronic device according to an embodiment of the disclosure is not limited to the above-described devices.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 2540) including one or more instructions that are stored in a storage medium (e.g., internal memory 2536 or external memory 2538) that is readable by a machine (e.g., the electronic device 2501). For example, a processor of the machine (e.g., the electronic device 2501) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment of the disclosure, each component (e.g., a module or a program) of the above-described components may include a single entity or multiple entities. Some of the plurality of entities may be separately disposed in different components. According to an embodiment of the disclosure, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment of the disclosure, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
a touchscreen display;
a communication module;
at least one processor; and
memory storing instructions, wherein the instructions, when executed by the at least one processor, cause the electronic device to:
transmit, through the communication module, information about a user's utterance history to an external device, wherein the user's utterance history transmitted to the external device is classified into at least one utterance category by at least one error detection module stored in the external device;
in response to the transmission, obtain, through the communication module, from the external device, information about the classified at least one utterance category and at least one representative utterance sentence belonging to the utterance category; and
provide, through the touchscreen display, the information about the obtained utterance category and the representative utterance sentence.

2. The electronic device of claim 1, wherein the error detection module is generated by being trained based on the user's utterance history and utterance histories of other users.

3. The electronic device of claim 1 or 2, wherein the error detection module includes at least one module among an end-to-end error detection module, a slot error detection module, a failure type detection module, or an unsupported utterance detection module.

4. The electronic device of any one of claims 1 to 3, wherein the utterance category includes at least one of utterance success, utterance failure, or unsupported utterance.

5. The electronic device of any one of claims 1 to 4, wherein the external device further includes an integration module configured to integrate results of the error detection module.

6. The electronic device of any one of claims 1 to 5, wherein the external device is configured to transmit, to the electronic device, a message recommending an application capable of performing a task according to the user's utterance.

7. The electronic device of any one of claims 1 to 6, wherein the representative utterance sentence is determined based on a similarity to an utterance included in the utterance history.

8. The electronic device of any one of claims 1 to 7, wherein the plurality of instructions further include instructions configured to cause the electronic device to provide, through the touchscreen display, information about an utterance success rate transmitted from the external device together with the representative utterance sentence.

9. The electronic device of any one of claims 1 to 8, wherein the external device further includes a client error verification module, and the client error verification module is configured to, when an error related to an utterance included in the utterance history is identified as a user's intention, classify a category of the utterance included in the utterance history as the utterance success.

10. The electronic device of any one of claims 1 to 9, wherein the external device further includes a server error verification module, and the server error verification module is configured to, when an error related to an utterance included in the utterance history is identified as a server error, classify a category of the utterance included in the utterance history as the utterance failure.

11. A computer-readable non-transitory recording medium configured to store instructions, wherein the instructions, when executed by at least one processor of an electronic device, cause the electronic device to:
transmit, through a communication module of the electronic device, information about a user's utterance history to an external device, wherein the user's utterance history transmitted to the external device is classified into at least one utterance category by at least one error detection module stored in the external device;
in response to the transmission, obtain, through the communication module, from the external device, information about the classified at least one utterance category and at least one representative utterance sentence belonging to the utterance category; and
provide, through a touchscreen display of the electronic device, the information about the obtained utterance category and the representative utterance sentence.

12. The computer-readable non-transitory recording medium of claim 11, wherein the error detection module is generated by being trained based on the user's utterance history and utterance histories of other users.

13. The computer-readable non-transitory recording medium of claim 11 or 12, wherein the error detection module includes at least one module among an end-to-end error detection module, a slot error detection module, a failure type detection module, or an unsupported utterance detection module.

14. The computer-readable non-transitory recording medium of any one of claims 11 to 13, wherein the utterance category includes at least one of utterance success, utterance failure, or unsupported utterance.

15. The computer-readable non-transitory recording medium of any one of claims 11 to 14, wherein the external device further includes an integration module configured to integrate results of the error detection module.
